# EUROPEAN PATENT APPLICATION

(11) **EP 4 717 437 A2**
(43) Date of publication of application: **01.04.2026**
(21) Application number: 25204250.2
(22) Date of filing: 24.09.2025
(51) Int. Cl.: B29C 49/00, C08G 63/183, C08G 63/685, C08G 63/91, C08G 81/00, B29C 49/06, C08L 67/02

(54) **POLYMER, PREFORM, BIAXIALLY STRETCHED MOLDED ARTICLE, RESIN PELLET, AND METHOD OF PRODUCING BIAXIALLY STRETCHED MOLDED ARTICLE**

(30) Priority: 25.09.2024 JP 2024166618
(71) Applicant: Canon Kabushiki Kaisha, Tokyo, 146-8501 (JP)
(72) Inventor: ASHIBE, Tsunenori, Ohta-ku, Tokyo, 146-8501 (JP); KODAIRA, Koki, Ohta-ku, Tokyo, 146-8501 (JP); DOI, Yohei, Ohta-ku, Tokyo, 146-8501 (JP)
(74) Representative: TBK

(57) **Abstract**

A polymer including a polyethylene terephthalate linked by a polycarbodiimide represented by formula (1), wherein the polymer has a melt flow rate (MFR) of 41 g/10 min or more: 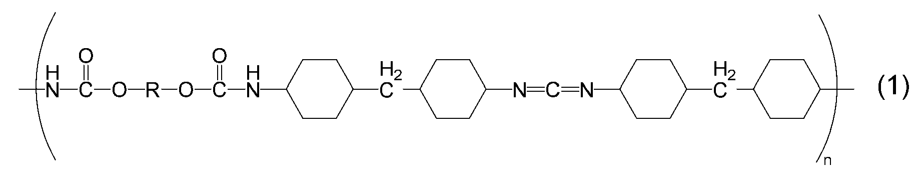 in formula (1), R represents an alkylene group having 1 to 12 carbon atoms, and n represents an integer of 2 or more and 10 or less.

## Description

### TECHNICAL FIELD

The present disclosure relates to a polymer, a preform, a biaxially stretched molded article, a resin pellet, and a method of producing a biaxially stretched molded article.

### BACKGROUND

As a container having a bottle shape, the bottle is required to have strength, for example, with which the bottle is not broken even when dropped, and hence a molded article obtained by subjecting a polyethylene terephthalate (hereinafter sometimes referred to as "PET") resin to injection molding and stretch blow molding is used (Japanese Patent Laid-Open No. 2001-42626).

In recent years, from the viewpoint of environmental protection, recycling of a PET bottle into a PET bottle again has been widely performed. Here, as a method of recycling a PET, chemical recycling and material recycling as described in paragraphs 8 and 9 of Japanese Patent Laid-Open No. 2014-198422 are known.

As disclosed in Japanese Patent Laid-Open No. 2000-169623, the chemical recycling requires a multi-stage process, and hence a decomposition facility and a polymerization facility for such process are required, resulting in high recycling cost. In addition, the chemical recycling has a large environmental load. Meanwhile, a PET resin obtained by the material recycling may undergo hydrolysis through the absorption of moisture from air into the PET resin and subsequent heating for pelletization, resulting in a reduction in molecular weight.

A molded product obtained through use of the PET resin having a reduced molecular weight may exhibit unstable strength. As a method of addressing such drawbacks of the material recycling, there is mechanical recycling including the step of adjusting an intrinsic viscosity by re-polymerization added thereto, as described in paragraph [0010] of Japanese Patent Laid-Open No. 2014-198422. However, solid phase polymerization that is known as a re-polymerization method for a PET resin also requires a large amount of thermal energy and has a large environmental load.

Incidentally, a PET resin to be used in a PET bottle has a molecular weight suitable for blow molding, and the molecular weight is the limiting viscosity of a PET when dissolved in a solvent, that is, a numerical value called an intrinsic viscosity (IV) value. In general, a viscosity of from about 0.70 to about 0.85 is used for the PET bottle.

The IV value represents a value dependent on a molecular weight. However, in the case where the IV value is less than 0.69, when an injection-molded article having a shape similar to a test tube, which is called a preform, is subjected to blow molding, the preform undergoes crystallization (spherulite formation) at the time of molding because of the low molecular weight thereof. The crystallization hardens the preform, and hence causes the preform to be ruptured without being expanded at the time of blow molding. Even when blow molding is successful, the strength (elastic modulus) of the resultant bottle and the like are reduced, making the bottle prone to breaking when dropped.

While the recycling of a PET bottle into a PET bottle is currently performed as described above, the PET resin is used in a large number of applications other than the PET bottle, such as a sheet-shaped product or fibers. The PET resin to be used in such application has an IV value of less than 0.69 in most cases, and hence the PET resin cannot be recycled as described above in the PET bottle application. As a result, the PET resin is recycled into a sheet or fibers or incinerated for thermal recycling in most cases.

However, in order to address an environmental problem, plastic needs to be reused, and there is a demand that even a PET resin from a sheet, fibers, or the like be recycled into a bottle shape having a wide range of applications.

As described above, the PET resin generated through recycling has a molecular weight lower than that of the PET resin for blow molding, and hence there is a problem in that a PET container cannot be produced again from the PET resin generated through recycling by stretch blow molding. In view of the foregoing, the present disclosure is directed to the provision of a resin mixture that enables stable stretch blow molding even with a PET resin having a molecular weight lower than that of the PET resin for blow molding. The present disclosure is also directed to the provision of a resin pellet, a preform, a biaxially stretched molded article, and a method of producing a biaxially stretched molded article.

### SUMMARY

To solve the above-mentioned disadvantages, the present disclosure in its first aspect provides a polymer as specified in claim 1. Optional features are specified in claims 5 and 6.

In addition, the present disclosure in its second aspect provides a preform for blow molding as specified in claim 2. According to the present disclosure, there is provided a preform for blow molding including the above-mentioned polymer.

In addition, the present disclosure in its third aspect provides a biaxially stretched molded article as specified in claim 3.

In addition, the present disclosure in its fourth aspect provides a resin pellet as specified in claim 4.

In addition, the present disclosure in its fifth aspect provides a polymer as specified in claim 7.

In addition, the present disclosure in its sixth aspect provides a method of producing a biaxially stretched molded article as specified in claim 8.

According to one aspect of the present disclosure, there can be obtained a polymer that enables stable stretch blow molding even through use of a PET recycled material of a collected sheet or fibers having a MFR value of 41 g/10 min or more. In addition, according to another aspect of the present disclosure, the polymer can be produced. According to still another aspect of the present disclosure, a biaxially stretched blow-molded article of high quality can be stably produced.

Features of the present disclosure will become apparent from the following description of embodiments with reference to the attached drawings. The following description of embodiments is described by way of example.

### BRIEF DESCRIPTION OF THE DRAWINGS

Fig. 1 is a schematic view of an image forming apparatus according to the present disclosure.
Fig. 2 is a schematic view for illustrating a method of molding a preform according to the present disclosure.
Fig. 3 is a schematic view for illustrating a blow molding method according to the present disclosure.
Fig. 4 is a graph showing S-S curves of uniaxial stretching according to the present disclosure.
Fig. 5 is a view for illustrating a sample shape for uniaxial stretching according to the present disclosure.
Fig. 6 is a graph showing S-S curves of uniaxial stretching of samples having different temperatures according to the present disclosure.
Fig. 7 is a schematic view of a twin screw extruder according to the present disclosure.
Fig. 8 is a schematic view of one-stage method blow molding according to the present disclosure.
Fig. 9 is a graph showing S-S curves of uniaxial stretching of Examples 1 to 4 according to the present disclosure.
Fig. 10 is a schematic view of a blow-molded bottle according to the present disclosure.
Fig. 11 is a graph showing S-S curves of uniaxial stretching of Comparative Examples 1 and 2 according to the present disclosure.
Fig. 12 is a schematic view of a pellet shape according to the present disclosure.

### DESCRIPTION OF THE EMBODIMENTS

In the present disclosure, the descriptions "XX or more and YY or less" and "from XX to YY" representing numerical ranges each mean a numerical range including a lower limit and an upper limit that are end points unless otherwise stated. In addition, when numerical ranges are described in stages, the descriptions disclose any combinations of the upper limits and lower limits of the respective numerical ranges.

Exemplary embodiments of the present disclosure are described in detail below with reference to the attached drawings. However, the scope of the present disclosure is not limited to the following embodiments. In the following description, "%" means "mass%" unless otherwise stated.

According to the investigations made by the inventors, a PET recycled material (sometimes referred to as "material recycled PET" or "MR-PET" in the present disclosure) of a collected sheet or fibers has a low molecular weight as described above, and further, even a recycled material derived from a PET bottle may have a molecular weight reduced through kneading or the like. Such MR-PET having a reduced molecular weight has shortened molecular chains and hence forms spherulites extremely easily.

Thus, even when an attempt is made to subject a preform formed from a MR-PET pellet having a molecular weight, that is, an IV value of less than 0.69 to biaxial stretch blow molding (sometimes referred to as "stretch blow molding" or "blow molding" in the present disclosure), the spherulites of MR-PET rapidly grow in the stretching process thereof. As a result, the preform is partially increased in hardness rapidly to form a site that cannot follow the stretching. As a result, it is conceived that the preform is ruptured at the site.

Alternatively, it is conceived that, even when a bottle can be formed, stress is concentrated in a portion of the bottle in which spherulites have grown, resulting in a reduction in strength. Further, in a PET resin having a reduced molecular weight, the strength at the time of stretching by stretch blow molding is not easily increased. The reason for this is conceived as described below. As a result of a reduction in molecular weight, the molecular chains are short, and hence the density of adjacent molecular chains is not easily improved when the molecular chains are extended by stretching. Thus, sufficient stretch crystallization does not easily occur.

Because of those problems, a PET resin for stretch blow molding is required to have an IV value of more than 0.70. Meanwhile, an increase in molecular weight of MR-PET by solid phase polymerization requires a large amount of energy as described above. Thus, it has been recognized that it is required to develop a polymer enabling stable stretch blow molding even when MR-PET having an IV value of less than 0.69 is used.

In the present disclosure, the IV value that represents a value dependent on the molecular weight of a PET resin is represented by a melt flow rate (MFR) value that serves as an indicator of the viscosity at the time of the melting of a PET polymer because the IV value may vary depending on, for example, the kind of a solvent.

Measurement was performed in conformity with JIS K7210-1:2014. However, a measurement temperature was set to 265°C, a load was set to 2.16 kg, and a standard die (nominal length: 8.000 mm, nominal hole diameter: 2.095 mm) was used as a die. A PET composition of the present disclosure was dried at 150°C for 5 hours or more, and the time period from the removal of the PET composition from a dryer to the start of the measurement was set to within 1 minute and 30 seconds. When the temperature is set to 265°C close to the melting point of PET, the influence of hydrolysis is minimized. In addition, the reason for setting the time period from the removal from the dryer to the start of the measurement to within 1 minute and 30 seconds is to reduce moisture absorption of the PET resin composition and minimize the influence of hydrolysis.

In addition, a shape used for measuring the MFR may be a preform in addition to a pellet. In the case of the preform, the preform may be pulverized to a size of from about 2 mm to about 3 mm. In the case of a bottle shape, it is preferred that the bottle be pulverized to a flake shape, and then the flakes be compressed with a stick forming machine manufactured by Toyo Seiki Seisaku-sho, Ltd., followed by MFR measurement.

The MFR value at which the IV value is less than 0.69 in this MFR is 41 g/10 min or more.

At least one aspect of the present disclosure is directed to the provision of a polymer that enables stable stretch blow molding through use of a MR-PET having a MFR of 41 g/10 min or more, that is, even with a PET resin having a molecular weight lower than that of a PET resin for blow molding. In addition, other aspects of the present disclosure are directed to the provision of a resin pellet, a preform, a biaxially stretched molded article, and a method of producing a biaxially stretched molded article.

### <First Embodiment>

A first embodiment relates to a polymer.

The polymer of the present disclosure is a polymer including a polyethylene terephthalate linked by a polycarbodiimide represented by the following formula (1), wherein the polymer contains 80 mass% or more of a polyethylene terephthalate moiety, and wherein the polymer has a melt flow rate (MFR) of 41 g/10 min or more: 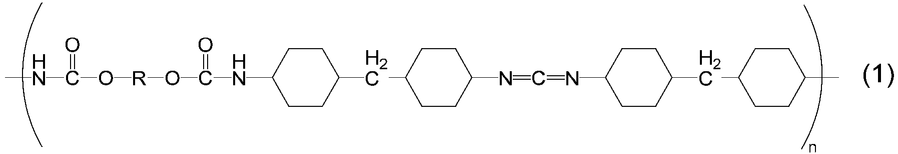 in the formula (1), R represents an alkylene group having 1 to 12 carbon atoms, and "n" represents an integer of 2 or more and 10 or less.

### (Polymer)

The polymer according to the present disclosure satisfies the following two conditions (a) and (b).

### ·Condition (a) The polymer includes a polyethylene terephthalate linked by a polycarbodiimide represented by the following formula (1):

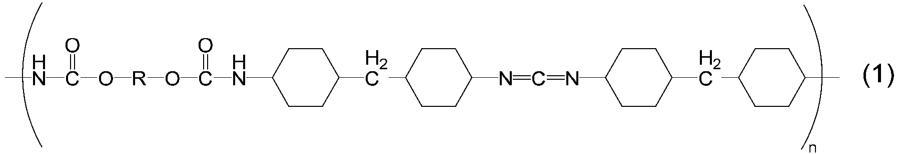

in the formula (1), R represents an alkylene group having 1 to 12 carbon atoms, and "n" represents an integer of 2 or more and 10 or less.

The number of repetitions "n" is more preferably from 5 to 30, still more preferably from 10 to 30.

### ·Condition (b) The polymer has a MFR of 41 g/min or more.

The linking of the polyethylene terephthalate by the polycarbodiimide is performed as described below.

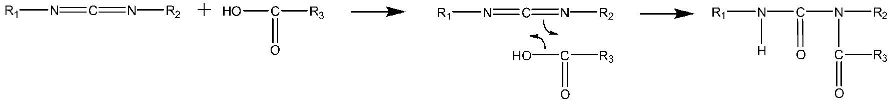

A reaction occurs between a plurality of carbodiimide groups of the polycarbodiimide and a carboxyl group of the polyethylene terephthalate, and hence a polymer in which the polyethylene terephthalate is linked via a polycarbodiimide unit is generated.

When the polycarbodiimide according to the present disclosure is used, a polymer having the following unit is obtained: 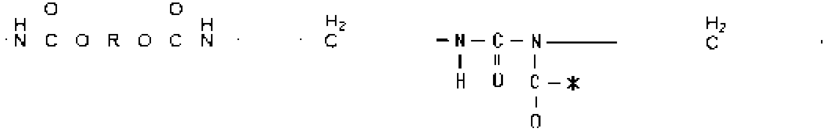 where "*" represents a bonding site with respect to the polyethylene terephthalate moiety.

In the polymer that satisfies the above-mentioned conditions (a) and (b), the formation of spherulites at the time of stretch blow molding is suppressed, and hence rupture at the time of stretching and a reduction in strength of a molded product can be prevented. As described above, the MR-PET has a molecular weight lower than that for blow molding when an original PET resin molded article for recycling is a sheet, fibers, or the like. In addition, even when a recycled material is created based on a bottle, the MR-PET has a reduced molecular weight by hydrolysis in some cases.

In addition, such MR-PET having a reduced molecular weight and having a MFR of 41 g/10 min or more is liable to form spherulites. In view of the foregoing, the inventors have attempted to cause the MR-PET having a MFR of 41 g/10 min or more to react with a polycarbodiimide to modify the MR-PET. As described in Japanese Patent Laid-Open No. 2013-159681, it has already been known that, when a PET is caused to react with a polycarbodiimide, hydrolysis resistance of the PET is improved.

However, as a result of the investigations made by the inventors, when the PET having a MFR of 41 g/10 min or more is caused to react with the polycarbodiimide, even the MR-PET having a reduced molecular weight is less liable to be crystallized. As a result, even in the PET that satisfies the condition (b), the rupture is less liable to occur in a stretching process when stretch blow molding is performed.

The PET according to the above-mentioned condition (b) (hereinafter sometimes referred to as "modified PET") is obtained by causing a PET serving as a target to be modified (hereinafter sometimes referred to as "unmodified PET") to react with a polycarbodiimide. The unmodified PET may be a MR-PET or a PET of a virgin material having a low molecular weight, which is not for blow molding. However, when the MR-PET having a problem of being liable to form spherulites is used as the unmodified PET, the effects according to the present disclosure are more significantly exhibited. The presence and quantification of an imide bond in the modified PET may be determined, for example, by measurement using FT-IR.

The ratio of the polyethylene terephthalate moiety in the polymer is required to be 80 mass% or more. When the ratio is 80 mass% or more, blow molding using the polymer according to the present disclosure can be stably performed. The ratio of the polyethylene terephthalate moiety in the polymer is preferably 95 mass% or more, more preferably 98 mass% or more.

When stretch blow molding is performed, it is important to grasp the stretching characteristics of a material therefor. However, the stress at the time of stretching cannot be directly measured from a preform for blow molding. As described above, while it is difficult to recognize how the characteristics of a biaxially stretched blow-molded article are changed in a biaxially stretched state, changes in characteristics can be recognized for uniaxial stretching.

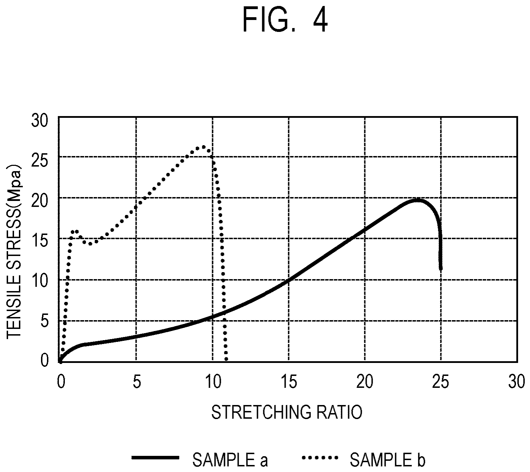

Fig. 4 is a graph showing how the characteristics of a PET resin are changed by uniaxial stretching.

### (Method of evaluating Polymer)

As a method of evaluating the polymer, a method involving producing a Charpy specimen from a PET resin and measuring the characteristics thereof at the time of uniaxial stretching is described.

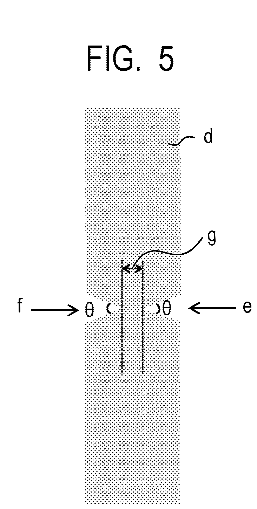

First, a PET resin is molded into a sample shape (Charpy specimen "d" in Fig. 5) in conformity with JIS K7111 with an injection molding device to provide an unstretched molded article. In a center portion of the Charpy specimen, notches (cuts) are formed by shaving from two directions (e-direction and f-direction) with a notching machine (not shown) as illustrated in Fig. 5. The shaving is continued until a distance "g" between the deepest point of the notch formed from the e-direction and the deepest point of the notch formed from the f-direction reaches 2.00 mm. The angle θ of each of the notches is set to 45°.

The shaved Charpy specimen (test piece) is heated with a heat gun until the Charpy specimen reaches a normal blow molding temperature. In this case, a region that is not to be stretched, that is, a region between the portion cut with the notching machine and the portion chucked with a tensile tester is protected with insulated sponge or the like so as to prevent an increase in temperature. The time required for the Charpy specimen to reach a predetermined temperature (e.g., 100°C) with the heat gun is preferably set to within 90 seconds.

When the temperature of a portion to be stretched reaches the predetermined temperature, a tensile test is performed at a speed of 500 mm/min with a tensile tester (Instron 5582, manufactured by Instron Corporation) in conformity with JIS K7161, and a strain-stress curve, that is, a S-S curve is output. It is preferred that the polymer according to the present disclosure have a stress at the time of 5-fold stretching read from the S-S curve of 2.0 MPa or more and 15.0 MPa or less. When the stress at the time of 5-fold stretching falls within the above-mentioned range, biaxial stretch blow molding of a preform can be more easily performed. As a result, a PET bottle excellent in strength in which stretch crystallization has uniformly proceeded can be more easily obtained.

### (Evaluation Example of Polymer)

As a specific example, S-S curves at 100°C of the following samples "a" and "b" formed of PET are shown in Fig. 4.

### ·Sample "a":

A sample in an amorphous state formed of 100% of a PET resin (product name: TN-8550FF, manufactured by Teijin Limited, IV value=0.77 dL/g). The MFR value of the PET resin was 25 g/10 min.

### ·Sample "b":

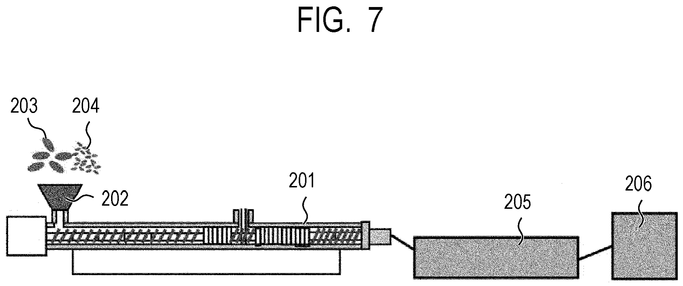

A PET resin (product name: TN-8550FF, manufactured by Teijin Limited, IV value=0.77 dL/g) extruded with a twin screw extruder illustrated in Fig. 7, followed by hydrolysis, with a MFR value of 48 g/10 min (equivalent to an IV value of 0.63). In Fig. 7, there is illustrated a device in which masterbatch pellets 204 each containing a polycarbodimide and unmodified PET 203 are loaded from a hopper 202 into an extruder 201, melted and kneaded by heating at a temperature equal to or more than the melting point of the PET, specifically 250°C or more, in particular 260°C or more, then extruded into a cord shape, cooled through a water tank 205, and pelletized with a pelletizer 206.

As shown in Fig. 4, the stress of the sample "a" in the amorphous state with respect to strain, that is, when the stretching ratio reached 5 after the stretching was started, was as low as 2.9 MPa, and was 5.1 MPa at the time of 10-fold stretching. In addition, the stretching ratio when the stretching is stopped is also extremely high, that is, 20 or more. This state corresponds to the stress at which the sample can be easily elongated with a stretching rod when vertical stretching is performed through use of the stretching rod in stretch blow molding, and the sample can be expanded without being ruptured even in blow molding.

In the sample "b" in Fig. 4, the Charpy specimen became cloudy and the sample was crystallized by heating with a heat gun because the molecular weight was low and the crystallization speed was high. As a result, the stress when the stretching ratio reached 5 after the stretching was started was 19.1 MPa. In addition, the sample was ruptured at a stretching ratio slightly more than 9. Thus, in the sample "b", even when, after a preform was actually created, an attempt was made to subject the preform to stretch blow molding by heating the preform to a temperature of 100°C, biaxial stretch blow molding of the preform was not able to be performed.

As described above, there is a strong correlation between the crystallization state of PET and the stretch blow molding properties thereof. Thus, it is conceived that the measurement of a stress at the time of uniaxial stretching heated to a blow molding temperature is suitable for determining the feasibility of biaxial stretch blow molding.

In addition, the present disclosure has a feature in that, even with a PET resin having a MFR of 41 g/10 min or more, the strength (mainly elastic modulus) of a blow-molded article is improved by blow molding at a temperature lower than an ordinary blow molding temperature. In a conventional method, when the molecular weight of a PET resin is reduced, the strength thereof at the time of stretch blow molding may be reduced. This is because, in the crystals formed by stretching, when the molecular chains are shortened (molecular weight is reduced), the bond between the crystals is weakened, with the result that crystal portions are liable to be ruptured.

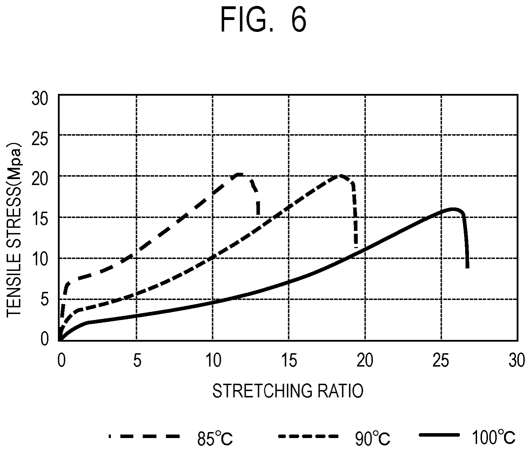

A method of solving the above-mentioned problem is reducing the blow molding temperature. The details thereof are described below with reference to Fig. 6.

### ·Sample "c":

| | |
|---|---|
| PET (MFR: 56 g/10 min (equivalent to an IV of 0.58)) | 99.7% |
| Polycarbodimide (CARBODILITE HMV-15CA) | 0.3% |

The above-mentioned materials were melted and mixed at the above-mentioned blending ratio with a twin screw extruder (PCM46, manufactured by Ikegai Co., Ltd.) at 260°C and a screw rotation number of 300 rpm. The PET having a low molecular weight was polymerized by blending the polycarbodiimide. Thus, a sample "c" having a MFR of 45 g/10 min (equivalent to an IV of 0.65) was prepared. The sample "c" was subjected to Charpy specimen molding and notching by the same method as those of the samples "a" and "b", and the resultant sample was subjected to a tensile test at heating temperatures of 100°C, 90°C, and 85°C (Fig. 6).

The stress at each of stretching ratios of 5 and 10, and the stretching ratios until rupture occurs are shown in Table 1 below.

**Table 1**

| | Stretching ratio of 5 (MPa) | Stretching ratio of 10 (MPa) | Rupture elongation (times) |
|---|---|---|---|
| 100°C | 2.90 | 4.58 | 26.08 |
| 90°C | 5.86 | 10.38 | 20.13 |
| 85°C | 10.75 | 18.03 | 12.23 |

At a heating temperature of 90°C, the stress at a stretching ratio of 10 was 10.38 MPa, which was twice or more as large as that at 100°C. In addition, at a heating temperature of 85°C, the stress was 18.03 MPa, which was about 4 times or more as large as that at 100°C. It is conceived that molecular movement is limited by reducing the temperature at the time of stretching, and the molecular chains of the PET are forcibly arranged in the stretching direction to generate strong stretched crystals.

As described above, even when the PET resin is generally put into a state in which stretched crystals are weak owing to a reduction in molecular weight, molding can be performed without any reduction in strength (elastic modulus) depending on the stretching temperature. When the polycarbodiimide is not blended as in the sample "b", the PET having a reduced molecular weight cannot be molded in the first place, and hence the effects cannot be exhibited without the resin composition of the present disclosure.

In addition, the feature of the present disclosure of reducing the blow molding temperature means that the amount of energy for heating the preform can be reduced. Thus, a reduction in energy, which is one of the purposes of recycling, can be achieved and a contribution can be made to CO₂ reduction.

In addition, the crystallization of the preform in the present disclosure is different from the stretch crystallization. The crystals of the preform are isothermal crystals (spherulites), which are crystals that become cloudy, but the stretched crystals are transparent crystals. Although both the crystals are referred to as crystals, those crystals are significantly different from each other in crystal shapes. That is, the isothermal crystals are crystals generated with molecular chains folded, and the stretched crystals are crystals in which the molecular chains are stretched in the stretching direction and the molecular chains are regularly arranged in the stretching direction, to thereby improve the density.

In addition, the generation of the isothermal crystals varies depending on temperature and time, but the stretched crystals are crystals generated at the time of stretching. As a result, the stretching time of the stretched crystals is about 1 second, and the crystallization thereof is completed in a short time period. Thus, the isothermal crystals and the stretched crystals are significantly different from each other, and in the present disclosure, even the case in which the isothermal crystals are not easily generated does not contract the generation of the stretched crystals.

It is preferred that, when a Charpy specimen of the polymer of the present disclosure is subjected to a tensile test at 90°C, a ratio of a tensile stress at a stretching ratio of 10 with respect to a tensile stress at a stretching ratio of 2 be 2 or more. In addition, it is preferred that, when a Charpy specimen of the polymer of the present disclosure is subjected to a tensile test at 85°C, a ratio of a tensile stress at a stretching ratio of 10 with respect to a tensile stress at a stretching ratio of 2 be 2 or more. With this configuration, through use of the resin mixture of the present disclosure, more stable blow molding can be performed, and a PET container of higher quality can be obtained.

### (PET)

A PET is obtained by a condensation reaction or ester exchange reaction between terephthalic acid or an ester-forming derivative thereof and 1,2-ethanediol or an ester-forming derivative thereof. The PET may be any one of a copolymer PET and a homopolymer.

### (Polycarbodiimide)

The modified PET according to the present disclosure is obtained by causing the PET to react with the polycarbodiimide as described above. The polycarbodiimide to be used for modification has two or more carbodiimide groups each represented by "-N=C=N-" in a molecule thereof.

The presence of the two or more carbodiimide groups allows two or more PET molecules to be linked, and hence the apparent molecular weight is increased. The foregoing can suppress crystallization. Further, in the case of a structure linked to PET molecules in the state of the formula (1), a so-called comb-like shape is formed, resulting in a structure that is less subjected to crystallization. The polycarbodiimide may be produced, for example, by heating an organic isocyanate in the presence of a catalyst, followed by a decarboxylation reaction.

Examples of the organic isocyanate include an aliphatic diisocyanate, an alicyclic diisocyanate, and an aromatic diisocyanate. Specific examples of the polycarbodiimide include: an aromatic polycarbodiimide, such as poly(4,4'-diphenylmethane carbodiimide), poly(p-phenylene carbodiimide), poly(m-phenylene carbodiimide), poly(diisopropylphenyl carbodiimide), or poly(triisopropylphenyl carbodiimide); and an alicyclic polycarbodiimide such as poly(dicyclohexylmethane carbodiimide).

Those polycarbodiimides may be used alone or in any combination thereof. Of those polycarbodiimides, an aliphatic polycarbodiimide is preferred from the viewpoint of further reducing the density of the modified PET.

The aliphatic polycarbodiimide is commercially available, for example, as "CARBODILITE HMV-15CA," "CARBODILITE LA-1," and "CARBODILITE HMV-5CA-LC" (all of which are product names, manufactured by Nisshinbo Chemical Inc.).

The blending amount of the polycarbodiimide with respect to the unmodified PET is preferably 0.02 part by mass or more and 1.0 part by mass or less when the amount of the unmodified PET is 100 parts by mass. It is not preferred that the blending amount be less than 0.02 part by mass because the crystallization-preventing effect is reduced. In addition, it is not preferred for the following reason that the blending amount be more than 1.0 part by mass. The molecular weight is excessively increased, and when the molding temperature is reduced, the initial stress at the time of stretching is increased, with the result that rupture is liable to occur in the same manner as in crystallization.

As a reaction method for the polycarbodiimide and the unmodified PET, there is given, for example, a method involving melting and kneading a mixture of the polycarbodiimide and the unmodified PET by heating the mixture at a temperature equal to or higher than the melting point of the PET, specifically, 250°C or more, in particular, 260°C or more with an extruder. In addition, the polycarbodiimide is in a powder form, and hence when the reaction is performed with an injection molding machine, a masterbatch obtained by diluting and kneading the polycarbodiimide with a PET resin and pelletizing the resultant may be used.

In addition, examples of a method of recognizing that the polycarbodiimide is contained in the resin composition of the present disclosure include X-ray photoelectron spectroscopy (XPS) and Fourier transform infrared spectroscopy (FT-IR), but are not limited thereto. When analysis is performed, the sample may be a preform or a resin pellet in addition to a blow-molded product (biaxially stretched molded article) described later.

### <Resin Pellet>

A resin pellet of the present disclosure includes the polymer of the present disclosure. The resin pellet is formed, for example, by extruding the resin mixture of the present disclosure into a cord shape (sometimes referred to as "strand") after melting the resin mixture with a resin extruder (e.g., single screw or twin screw), cooling the cord in a water tank or the like, and then cutting the resultant into a particle shape with a cutting device called a strand cutter.

### <Preform>

A preform of the present disclosure is a preform for blow molding and includes the polymer of the present disclosure. The preform is an intermediate product produced from the polymer of the present disclosure or the resin pellet of the present disclosure for biaxial stretch molding and has a shape similar to a test tube, for example. This preform is placed in a mold, subjected to blow molding with heating, and expanded in the mold. Thus, a biaxially stretched molded article can be produced.

### <Biaxially Stretched Molded Article>

A biaxially stretched molded article of the present disclosure includes the polymer of the present disclosure. In the biaxially stretched molded article of the present disclosure, under a state in which the preform of the present disclosure is heated to a predetermined temperature (e.g., about 100°C in the case of a PET resin), a gas is caused to flow into the preform of the present disclosure to expand the preform (blow molding), to thereby increase the total length and diameter of the preform. As a result, there are uniaxial stretching in which the total length is increased and uniaxial stretching in which the diameter is increased. A molded article including both types of uniaxial stretching is referred to as "biaxially stretched molded article." Typical examples of the biaxially stretched molded article include PET bottles for various containers, such as a PET bottle for a beverage, a soy sauce container, a cosmetic container, and a toner container for a toner of a copying machine. The present disclosure may be used for those applications.

### <Toner Bottle>

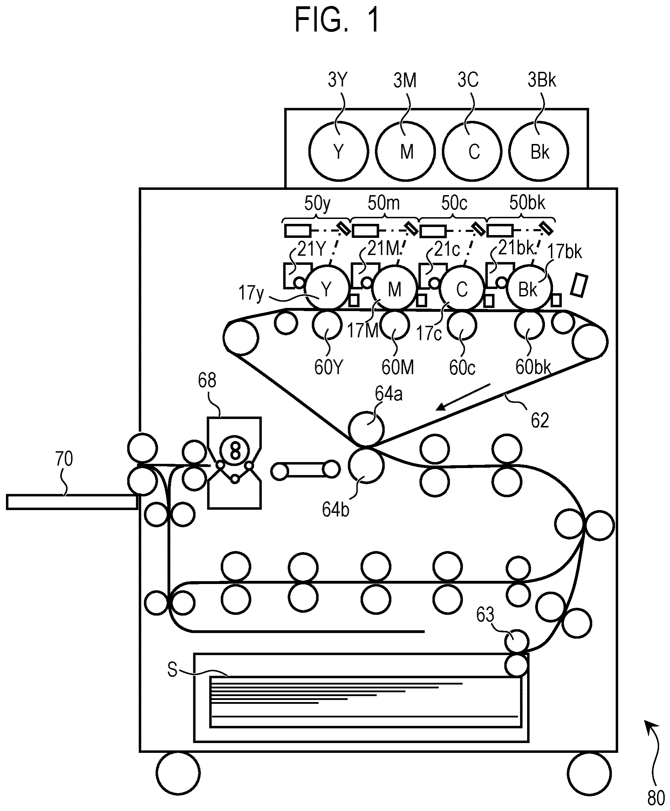

A first embodiment of the present disclosure is described with reference to the drawings. Fig. 1 is an explanatory view for illustrating a schematic configuration of an image forming apparatus of four colors using an electrophotographic system in which a main body 80 of the image forming apparatus is illustrated. The image forming apparatus 80 is configured as an image forming apparatus of a so-called intermediate transfer tandem system in which four-color image forming portions are arranged in a row on an intermediate transfer belt.

In the image forming apparatus 80, image formation is performed as described below. First, in the image forming apparatus 80, an electrostatic latent image is formed on a photosensitive drum 17 (17y, 17m, 17c, 17bk) by an exposure device 50 (50y, 50m, 50c, 50bk) based on print data. Then, in the image forming apparatus 80, the formed electrostatic latent image is developed by a developing device 21 (21y, 21m, 21c, 21bk) to form a toner image.

In the image forming apparatus 80, the toner image is transferred onto an intermediate transfer member 62 by a primary transfer device 60 (60y, 60m, 60c, 60bk), and then transferred onto a sheet material S supplied from a sheet feeding device 63 by a secondary transfer unit 64 (64a, 64b). Next, in the image forming apparatus 80, the toner image transferred onto the sheet material S is fixed to the sheet material S by a fixing unit 68, and then the sheet material S is delivered onto a sheet delivery tray 70.

In addition, in the image forming apparatus 80, the toner image is formed by the developing device 21, and in order to supply a toner to the developing device 21, a detachably attachable toner bottle 3 (3Y, 3M, 3C, 3Bk) is used. The toner bottle of the present disclosure is the toner bottle 3 to be used as described above.

### <Second Embodiment>

A second embodiment relates to a method of producing a biaxially stretched molded article.

The method of producing a biaxially stretched molded article of the present disclosure includes the steps of: producing a preform from a polymer; and subjecting the preform to blow molding, wherein the polymer includes a polymer including a polyethylene terephthalate linked by a polycarbodiimide represented by the following formula (1), and wherein the polymer has a melt flow rate (MFR) of 41 g/10 min or more. 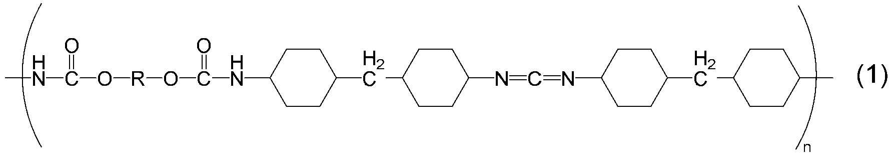 in the formula (1), R represents an alkylene group having 1 to 12 carbon atoms, and "n" represents an integer of 2 or more and 10 or less.

In the following, the items described in the first embodiment may be omitted in order to avoid the repetition of description.

As an application of the PET bottle of the present disclosure, a toner bottle serving as a toner container for electrophotography (an image forming apparatus) is described below.

One aspect of a method of producing a toner bottle by biaxial stretch blow molding through use of the polymer according to the present disclosure is described below.

### (Step of producing Preform from Polymer)

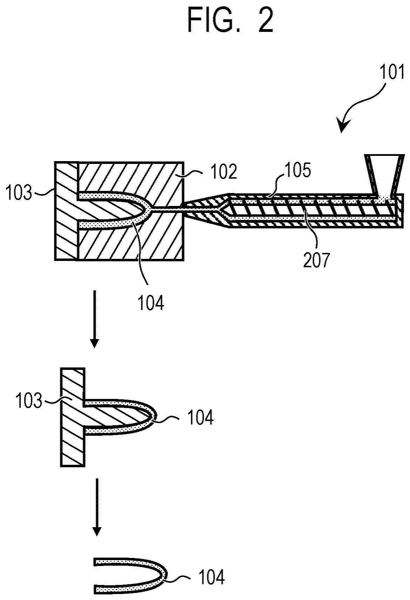

The method of producing a biaxially stretched molded article of the present disclosure includes the step of producing a preform from a polymer. First, as illustrated in Fig. 2, a preform 104 having a shape similar to a test tube is molded by injection molding. The preform is an injection-molded article required in an intermediate step of biaxial stretch blow molding, and a high-pressure gas is introduced into the preform in a test tube state to form the preform into a container shape. In a method of molding a preform, specifically, a material loaded into an injection molding machine 101 is heated into a molten state with a heating cylinder 105, and the material in a molten state is injected into preform molds 102 and 103 with an extrusion screw 207 to mold the preform 104.

### (Step of subjecting Preform to Blow Molding)

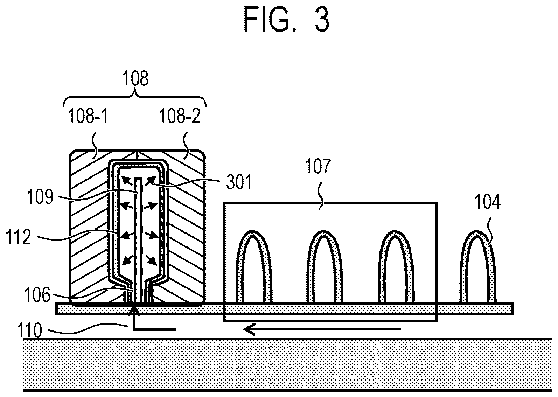

The method of producing a biaxially stretched molded article of the present disclosure includes the step of subjecting the preform to blow molding. Next, as illustrated in Fig. 3, biaxial stretch blow molding (biaxial stretch molding) is performed. First, the preform 104 is placed in a heating furnace 107 and heated to a temperature at which the preform 104 can be stretched. The heating time in this case is preferably within 3 minutes. When the heating time is set to within 3 minutes, the crystallization of a crystalline polyester can be prevented from proceeding in the preform during the heating. After the heating, the heated preform 104 is removed from the heating furnace 107 and arranged in a neck portion of a blow mold 108 in which a cavity is formed by combining a left-side mold 108-1 and a right-side mold 108-2.

The heated preform set in the blow mold 108 is stretched in a vertical direction with a stretching rod 109. This stretching is referred to as "primary stretching." At this time, it is preferred that a gas be caused to flow into the preform 104 so that the preform 104 is not brought into contact with the stretching rod 109. The pressure of the gas at this time is referred to as "primary blow pressure."

After the primary stretching is performed, a gas 110 is caused to flow into the preform from a preform neck portion 106 to expand the preform in a horizontal (circumferential) direction. This is referred to as "secondary stretching." In addition, the pressure of the gas at this time is referred to as "secondary blow pressure." Examples of the gas blown into the preform include air, nitrogen, carbon dioxide, and argon.

By performing the primary stretching and the secondary stretching, the preform 104 is expanded in directions indicated by arrows 301 to closely adhere to an inner wall of the blow mold 108, and is cooled in this state to be solidified. Then, by separating the left-side mold 108-1 and right-mold 108-2 of the blow mold 108, a blow-molded article 112 is removed from the blow mold 108. The blow-molded article 112 is stretched in both the vertical and horizontal directions, resulting in a molded article having high strength.

As described above, in the stretching step of injection stretch blow molding, it is important that the preform is in a state of not being crystallized (in a non-crystallized, that is, amorphous state). In the case where the temperature reaches the blow molding temperature while the preform is in an amorphous state, when the preform is directly subjected to blow molding, that is, biaxial stretch molding, the PET is crystallized by stretching in an elongated direction. Thus, a bottle having high strength can be formed.

As an injection stretch blow molding method, there are given a one-stage method and a two-stage method. The one-stage method is a method involving using the residual heat of the preform immediately after being removed from the mold to perform stretch blow molding directly or after temperature control. The two-stage method is a method involving temporarily cooling the preform to room temperature and then controlling the temperature of the preform again to perform stretch blow molding.

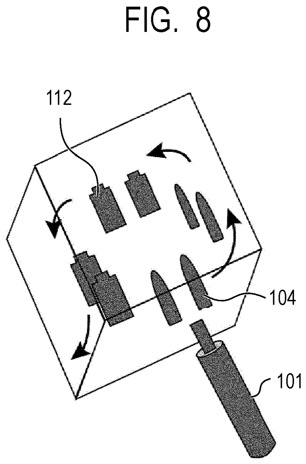

In the one-stage method, as illustrated in Fig. 8, the cooling at the time of injection molding is completed in a short time period of 10 seconds or less so that the preform 104 is not cooled to the glass transition temperature of the PET or less after the preform 104 is injection-molded from the injection molding machine 101. Then, the preform is immediately kept warm and heated to the blow molding temperature (e.g., 100°C) to perform blow molding, to thereby provide the blow-molded article 112. A device in which an injection molding device and a blow molding device are integrated is used.

The two-stage method is a method involving, after subjecting the preform to injection molding, cooling the preform to the glass transition temperature of the PET or less, removing the preform, and then heating the preform to the blow molding temperature (e.g., 100°C) with a separate blow molding device, to thereby perform blow molding. A device in which an injection molding device and a blow molding device are separate is used.

The one-stage method is preferred from the viewpoint that the preform is not cooled to the glass transition temperature or less and hence energy for reheating is small unlike the two-stage method. However, the time period during which the preform is held at the crystallization temperature of the PET after injection molding is prolonged, and hence the crystallization of isothermal crystals of the PET having a reduced molecular weight is liable to proceed.

Thus, the resin composition of the present disclosure exhibits the effect that the isothermal crystallization is less liable to proceed both in the one-stage method and the two-stage method, but in particular, the one-stage method has a particularly high effect because of the high crystallization speed. In addition, even in the two-stage method, the crystallization occurs when the heating time is prolonged, and hence the effect is increased also in this case.

A method of producing a PET resin composition having a MFR of 41 g/10 min or more to be used in the present disclosure is suitably a method using a twin screw extruder.

As recycled materials, a PET bottle, a PET film, and the like collected from the market are mainly used, and these materials are pulverized and then washed, and distributed in a flake shape. The flakes are not easily engaged with a screw of an injection molding machine even when being directly loaded into the injection molding machine, and hence the flakes are loaded into a twin screw extruder, plasticized, and molded into a pellet shape. Once the flakes are formed into a pellet shape, the pellets each have a shape similar to that of a PET pellet of a virgin material and hence are easily engaged with the screw of the injection molding machine.

However, a commercially available virgin PET resin is subjected to solid phase polymerization, whereas unprocessed extruded pellets are in a state having a low crystallization degree. The crystallization degree in solid phase polymerization is from about 61% to about 63% according to a density method, but the crystallization degree of the unprocessed extruded pellets is almost 0%. In this state, when the unprocessed extruded pellets are loaded into a dryer before being molded, the pellets are softened when the temperature reaches the glass transition temperature or more. As a result, the pellets stick to each other to form a lumpy substance retaining the approximate shape of each pellet. Thus, the extruded pellets are required to be crystallized.

In general, the crystallization is performed while the pellets are stirred at about 150°C, and the crystallization degree in this case is about 35%. In this state, even when the pellets are loaded into a dryer to be dried, the pellets do not form the above-mentioned lumpy substance.

However, when the crystallization was performed at 150°C with the pellets of the present disclosure, the engagement with the screw became unstable at the time of injection molding in some cases, though the pellets did not form lumps. In view of the foregoing, the crystallization degree was increased to 40% or more, and as a result, the engagement became stable. Thus, a crystallization degree of 40% or more is preferred for the pelletized PET resin composition to be used in the present disclosure.

In order to increase the crystallization degree, it is appropriate that the temperature at the time of crystallization treatment be increased. Specifically, a temperature of 180°C or more is preferred in the case of setting the crystallization degree to 40% or more. When the temperature is increased, the crystallization degree is increased. However, when the temperature is set to 200°C or more, the PET is oxidized to be degraded, and hence the upper limit temperature for crystallization is preferably less than 200°C.

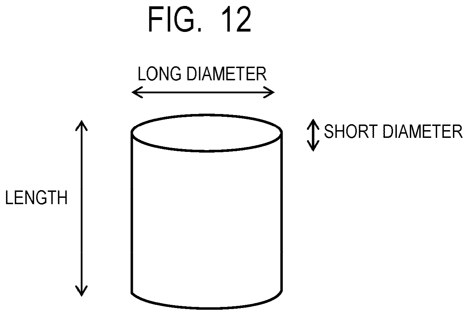

In addition, it was found that the size of each of the pellets contributed to the stability of engagement. Although the pellets each have a columnar shape, the pellets can each appear elliptical rather than perfectly circular as illustrated in Fig. 12. When the lengths of a major axis and a minor axis and the length of a column, in particular, the length of the minor axis is less than 2 mm, the stability of engagement deteriorates.

The preferred ranges of the size of each of the pellets is a minor axis length of 2 mm or more, a major axis length of 3 mm or more, and a column length of 3 mm or more.

### (Others)

In a method of producing a biaxially stretched molded article of the present disclosure, a polymer includes a polyethylene terephthalate linked by a polycarbodiimide represented by the following formula (1). The polymer has a melt flow rate (MFR) of 41 g/10 min or more: 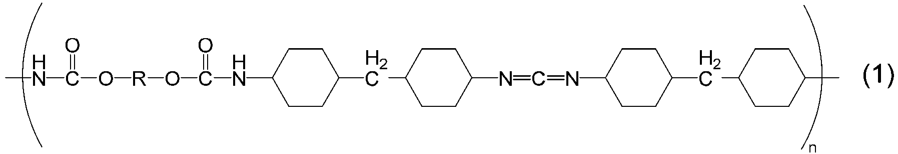 in the formula (1), R represents an alkylene group having 1 to 12 carbon atoms, and "n" represents an integer of 2 or more and 10 or less.

### (Examples)

The present disclosure is described in detail below by way of Examples and Comparative Examples. However, the present disclosure is not limited to these Examples.

In Examples and Comparative Examples, the following items were measured and evaluated.

In the following Examples, "%" means "mass%" unless otherwise stated.

### (Example 1)

### <Production of Recycled Pellet>

A PET bottle collected after being used for a beverage in the market was pulverized into a size of from about 5 mm square to about 10 mm square with a pulverizer to provide a flake product. The flake product was washed, and was then melted and kneaded with a twin screw extruder (PCM46, manufactured by Ikegai Co., Ltd.) at a temperature of 260°C, a screw rotation number of 200 rpm, and a discharge amount of 100 kg/h at a blending ratio shown in Table 2 below. After that, the resultant was pelletized.

**Table 2**

| Material | Blending ratio |
|---|---|
| Collected PET bottle flake | 99.70% |
| Polycarbodiimide compound represented by formula (1) (product name: CARBODILITE HMV-15CA (manufactured by Nisshinbo Chemical Inc.), in formula (1), R represents an alkylene group having 1 to 12 carbon atoms, and "n" represents an integer of from 10 to 30) | 0.30% |

The MFR value of each of the pellets was 42 g/10 min (equivalent to an IV of 0.68). The pellets were crystallized while being maintained at a temperature of 180°C for 3 hours. A crystallization degree was 42%. In addition, the pellets had a size of an average long diameter of 3.2 mm, an average short diameter of 2.3 mm, and an average length of 3.3 mm when 10 pellets were measured. The pellet is referred to as "MR-PET pellet (a)."

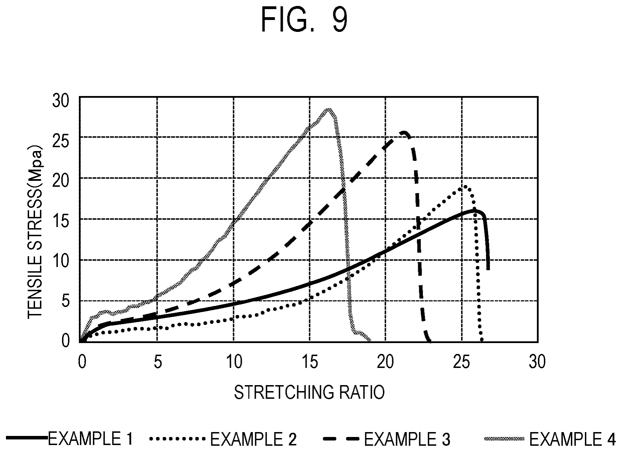

A sample of the resultant pellet (a) to be subjected to the above-mentioned tensile test was prepared, and a tensile test was performed at 100°C to create a S-S curve. The results are shown in Fig. 9. From the results, a stress at the time of 5-fold stretching was calculated. As a result, the stress was 2.92 MPa.

### <Production of Toner Bottle>

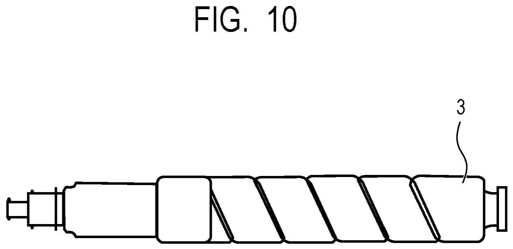

The toner bottle 3 (total length: 439.5 mm, diameter: 101 mm) illustrated in Fig. 10 was produced with a one-stage method blow molding device (ASB-70DPH, manufactured by Nissei ASB Machine Co., Ltd.). A blow stretching ratio was set to "vertical factor×horizontal factor=6.7."

The "vertical factor" of the blow stretching ratio is a value calculated by dividing the "total length after stretching" by the "total length (before stretching) of a portion (heated portion) of a preform that reaches a stretching temperature."

The "horizontal factor" of the blow stretching ratio is a value calculated by dividing the "diameter of an intermediate portion of the preform after stretching" by the "diameter (before stretching) of the intermediate portion of the preform."

### <Blow Molding Conditions>

The pellets of the polymer dried in the foregoing were loaded into an extrusion molding device of a one-stage stretch blow molding machine (product name: ASB-70DPH, manufactured by Nissei ASB Machine Co., Ltd.), and biaxial stretch blow molding was performed to mold a toner bottle. The one-stage stretch blow molding machine can perform the step of providing a preform having a test tube shape by injection molding and the step of providing a molded product having a bottle shape by subjecting the preform to biaxial stretch blow molding in succession. In addition, the screw diameter of an injection molding machine in the molding machine was 54 mm.

First, a mold capable of molding a preform having an outer diameter of 30 mm, a wall thickness of 3.7 mm, and a length of 220 mm was prepared as a mold for molding a preform. Then, a preform was molded under the following molding conditions.
·Screw diameter: 54 mm
·Screw position before a polymer is loaded into a cavity: 95 mm
·Injection speed
   Until the screw is advanced by 5 mm: 50% of the maximum speed
   Until the screw is further advanced by 20 mm: 30% of the maximum speed
   Until the screw is further advanced by 35 mm: 25% of the maximum speed
   PV switching position: 35 mm
·Injection pressure
   ·Until PV switching: 12.0 MPa
   ·After PV switching: 4.5 MPa (pressure keeping) ·Pressure keeping time after PV switching
   ·4.57 seconds
·Heating cylinder temperature: 280°C
·Cooling time: 8.0 seconds
·Mold temperature: 18°C.

After the elapse of a cooling time of 8.0 seconds, the preform was demolded and conveyed to a biaxial stretch blow molding station of the one-stage stretch blow molding machine. During the conveyance, the temperature of the preform was controlled as described below.

### ·Preform heating temperature

Position of 10% of the total length of the preform from an upper portion of the preform: 170°C
Position of 25% of the total length of the preform from the upper portion of the preform: 190°C
Position of 50% of the total length of the preform from the upper portion of the preform: 190°C
Position of 75% of the total length of the preform from the upper portion of the preform: 170°C.

Next, the preform adjusted to the above-mentioned temperatures was placed in a cylindrical mold adjusted to a temperature of 18°C, the cylindrical mold having a size corresponding to the size of a toner bottle, and biaxial stretch blow molding was performed to produce a blow-molded bottle. The preform that was being conveyed was heated, and thus, the surface temperature of a center portion of the preform immediately before being placed in the cylindrical mold was 95°C.

First, a stretching rod was inserted into the preform from a backward position through an opening of the preform, and was advanced until the stretching rod was brought into contact with a top of the preform. Then, an air pressure for driving the stretching rod was set to 1.2 MPa, and the stretching rod was further advanced. Next, primary air was introduced into the preform through the opening of the preform after 0.5 seconds from the start of further advancement of the stretching rod. The pressure of the primary air was set to 1.0 MPa.

Then, after 0.15 seconds from the introduction of the primary air, secondary air was introduced. The pressure of the secondary air was set to 2.9 MPa. Then, the air was introduced into the preform for 7.0 seconds from the start of the introduction of the primary air. Then, the pressure in the preform was returned to normal pressure over 2.5 seconds. In this manner, a blow-molded bottle was formed.

As a result, the blow-molded bottle was able to be molded without the preform being ruptured in the middle. In addition, the resultant blow-molded bottle was visually observed, and as a result, no strain caused by the generation of PET spherulites was recognized.

The center portion of the bottle was cut out, and its tensile elastic modulus was measured. As a result, the bottle was found to have a high strength because the tensile elastic modulus was 4,050 MPa.

### (Example 2)

### <Production of Recycled Pellet>

A PET film collected after being used as a PET film in the market was pulverized into a size of from about 5 mm square to about 10 mm square with a pulverizer to provide a flake product. The flake product was melted and kneaded with a twin screw extruder (PCM46, manufactured by Ikegai Co., Ltd.,) at a temperature of 260°C, a screw rotation number of 200 rpm, and a discharge amount of 100 kg/h at a blending ratio shown in Table 3 below. After that, the resultant was pelletized.

**Table 3**

| Material | Blending ratio |
|---|---|
| Collected PET film flake | 99.30% |
| Polycarbodiimide compound represented by formula (1) (product name: CARBODILITE HMV-15CA (manufactured by Nisshinbo Chemical Inc.), in formula (1), R represents an alkylene group having 1 to 12 carbon atoms, and "n" represents an integer of from 10 to 30) | 0.70% |

The MFR value of each of the pellets was 54 g/10 min (equivalent to an IV of 0.59). The pellets were crystallized while being maintained at a temperature of 180°C for 3 hours. A crystallization degree was 43%. In addition, the pellets had a size of an average long diameter of 3.1 mm, an average short diameter of 2.2 mm, and an average length of 3.2 mm when 10 pellets were measured. The pellet is referred to as "MR-PET pellet (b)."

A sample of the resultant pellet (b) to be subjected to the above-mentioned tensile test was prepared, and a tensile test was performed at 100°C to create a S-S curve, to thereby calculate a stress at the time of 5-fold stretching. As a result, the stress was 1.72 MPa. In addition, a stress at the time of 10-fold stretching was 2.69 MPa. At 100°C, a change in stress from 5-fold stretching to 10-fold stretching was as small as 1.56, and thus, it is conceived that stretch crystallization did not occur significantly.

### <Production of Blow-molded Bottle>

Biaxial stretch blow molding was performed in the same manner as in the above-mentioned blow molding conditions with the above-mentioned one-stage stretch blow molding machine except that Polymer No. 1 was used. As a result, a blow-molded bottle was able to be molded without the preform being ruptured in the middle.

The center portion of the bottle was cut out, and its tensile elastic modulus was measured to be 2,500 MPa. As indicated by the S-S measurement, it is conceived that molding can be performed but some stretch crystallization occurs.

### (Example 3)

A sample of the pellet (b) to be subjected to the above-mentioned tensile test was prepared, and a tensile test was performed at 90°C to create a S-S curve, to thereby calculate a stress at the time of 5-fold stretching. As a result, the stress was 3.61 MPa. In addition, a stress at the time of 10-fold stretching was 7.26 MPa. At 90°C, a change in stress from 5-fold stretching to 10-fold stretching was 2.01, which was larger than that at 100°C. Further, the absolute value of the stress at the time of 10-fold stretching was 7.26 MPa whereas the absolute value was 2.69 MPa at 100°C. Thus, based on the results, it can be presumed that stretch crystallization occurs and the strength of a bottle is increased.

Further, the pellet (b) was molded into a blow-molded bottle in the same manner as in Example 2, but the preform heating temperatures were changed as described below.
Position of 10% of the total length of the preform from an upper portion of the preform: 168°C
Position of 25% of the total length of the preform from the upper portion of the preform: 187°C
Position of 50% of the total length of the preform from the upper portion of the preform: 187°C
Position of 75% of the total length of the preform from the upper portion of the preform: 168°C

As a result, the surface temperature of the center portion of the preform immediately before being placed in the cylindrical mold was 90°C.

The center portion of the bottle was cut out, and its tensile elastic modulus was measured to be 3,500 MPa, which was higher than that of Example 2. The reason for this is conceived as follows: the stretched crystals became stronger because of a reduction in blow molding temperature by 5°C.

### (Example 4)

A sample of the pellet (b) to be subjected to the above-mentioned tensile test was prepared, and a tensile test was performed at 85°C to create a S-S curve, to thereby calculate a stress at the time of 5-fold stretching. As a result, the stress was 5.56 MPa. In addition, a stress at the time of 10-fold stretching was 14.64 MPa. At 85°C, a change in stress from 5-fold stretching to 10-fold stretching was 2.63, which was larger than that at 100°C. Further, the absolute value of the stress at the time of 10-fold stretching was 14.64 MPa, which was more than twice as high as that at the time of 5-fold stretching, whereas the absolute value was 2.69 MPa at 100°C. Thus, based on the results, it can be presumed that stretch crystallization occurs with the crystallization degree further increased and the strength of a bottle is increased.

Further, the pellet (b) was molded into a blow-molded bottle in the same manner as in Example 2, but the preform heating temperatures were changed as described below.
Position of 10% of the total length of the preform from an upper portion of the preform: 165°C
Position of 25% of the total length of the preform from the upper portion of the preform: 185°C
Position of 50% of the total length of the preform from the upper portion of the preform: 185°C
Position of 75% of the total length of the preform from the upper portion of the preform: 165°C

As a result, the surface temperature of the center portion of the preform immediately before being placed in the cylindrical mold was 85°C.

The center portion of the bottle was cut out, and its tensile elastic modulus was measured to be 3,900 MPa, which was equivalent to the elastic modulus of Example 1. From the results, it was found that even with recycled PET for a film having a high MFR value, that is, having a reduced molecular weight, a blow-molded article having sufficient strength was able to be produced by reducing the blow molding temperature by 15°C as compared to Example 2, even without a high IV for blow molding.

### (Comparative Example 1)

Only the collected PET bottle flakes used in Example 1 were melted and kneaded with a twin screw extruder (PCM46, manufactured by Ikegai Co., Ltd.) at a temperature of 260°C, a screw rotation number of 200 rpm, and a discharge amount of 100 kg/h and then pelletized to provide pellets (c). The MFR value of each of the pellets (c) was 49 g/10 min (equivalent to an IV of 0.62). The pellets were crystallized while being maintained at a temperature of 150°C for 3 hours. A crystallization degree was 35%. In addition, the pellets had a size of an average long diameter of 2.8 mm, an average short diameter of 1.8 mm, and an average length of 3.0 mm when 10 pellets were measured. The pellet is referred to as "MR-PET pellet (c)."

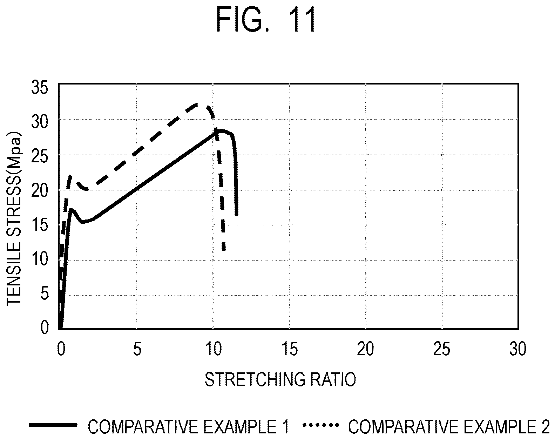

A sample of the pellet (c) to be subjected to the above-mentioned tensile test was prepared, and a tensile test was performed at 100°C to create a S-S curve. The results are shown in Fig. 11. From the results, a stress at the time of 5-fold stretching was calculated. As a result, the stress was 19.58 MPa. In addition, a stress at the time of 10-fold stretching was 26.79 MPa. The stress at the time of 5-fold stretching was high. Thus, it is conceived that isothermal crystallization occurred, and the sample was not able to be stretched when blow molding was performed. Based on the results, it can be presumed that the sample may be ruptured.

The pellets (c) were used to produce a blow-molded bottle in the same manner as in Example 1. However, at the time of injection molding, measurement was unstable. After that, blow molding was attempted, but the preform was ruptured in the middle of stretching in a uniaxial direction with a stretching rod, and blow molding was not able to be performed.

### (Comparative Example 2)

Only the collected PET film flakes used in Example 2 were melted and kneaded with a twin screw extruder (PCM46, manufactured by Ikegai Co., Ltd.) at a temperature of 260°C, a screw rotation number of 200 rpm, and a discharge amount of 100 kg/h and then pelletized to provide pellets (d). The MFR value of each of the pellets (d) was 72 g/10 min (equivalent to an IV of 0.48). The pellets were crystallized while being maintained at a temperature of 150°C for 3 hours. A crystallization degree was 35%. In addition, the pellets had a size of an average long diameter of 2.7 mm, an average short diameter of 1.9 mm, and an average length of 2.8 mm when 10 pellets were measured.

A sample of the pellet (d) to be subjected to the above-mentioned tensile test was prepared, and a tensile test was performed at 100°C to create a S-S curve. The results are shown in Fig. 11. From the results, a stress at the time of 5-fold stretching was calculated. As a result, the stress was 24.56 MPa. In addition, the sample was ruptured without being able to be stretched by 10. The stress at the time of 5-fold stretching was significantly high. Thus, it is conceived that isothermal crystallization occurred, and the sample was not able to be stretched when blow molding was performed. Based on the results, it can be presumed that the sample may be ruptured.

The pellets (d) were used to produce a blow-molded bottle in the same manner as in Example 1. However, at the time of injection molding, measurement was unstable. After that, blow molding was attempted, but the preform was ruptured in the middle of stretching in a uniaxial direction with a stretching rod, and blow molding was not able to be performed. In addition, the screw was stopped in the middle of injection molding, and hence the molding was not able to be performed.

Various embodiments have been described in detail above but it will be understood that the present disclosure is not limited to these embodiments and encompasses all modifications, variants, alternatives and equivalents falling within the scope of the appended claims.

## Claims

1. A polymer comprising:
a polyethylene terephthalate linked by a polycarbodiimide represented by formula (1),
wherein the polymer contains 80 mass% or more of a polyethylene terephthalate moiety, and
wherein the polymer has a melt flow rate (MFR) of 41 g/10 min or more: 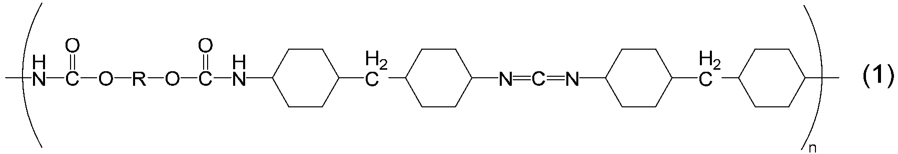
in formula (1), R represents an alkylene group having 1 to 12 carbon atoms, and n represents an integer of 2 or more and 100 or less.

2. A preform (104) for blow molding comprising the polymer of claim 1.

3. A biaxially stretched molded article (112) comprising the polymer of claim 1.

4. A resin pellet comprising the polymer of claim 1.

5. The polymer according to claim 1, wherein, in a case that a Charpy specimen (d) of the polymer is subjected to a tensile test at 90°C, a ratio of a tensile stress at a stretching ratio of 10 with respect to a tensile stress at a stretching ratio of 2 is 2 or more.

6. The polymer according to claim 1, wherein, in a case that a Charpy specimen (d) of the polymer is subjected to a tensile test at 85°C, a ratio of a tensile stress at a stretching ratio of 10 with respect to a tensile stress at a stretching ratio of 2 is 2 or more.

7. A polymer comprising:
a unit represented by formula (2),
wherein the polymer contains 80 mass% or more of a polyethylene terephthalate moiety, and
wherein the polymer has a melt flow rate (MFR) of 41 g/10 min or more: 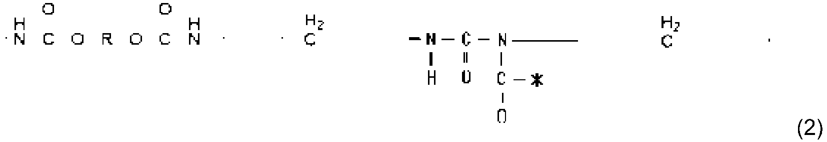
where "*" represents a bonding site with respect to the polyethylene terephthalate moiety.

8. A method of producing a biaxially stretched molded article (112) comprising:
producing a preform (104) from a polymer; and
subjecting the preform (104) to blow molding,
wherein the polymer includes a polymer including a polyethylene terephthalate linked by a polycarbodiimide represented by formula (1), and
wherein the polymer has a melt flow rate (MFR) of 41 g/10 min or more: 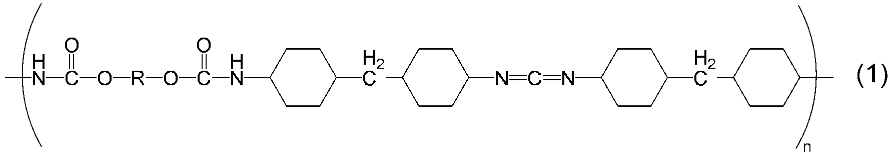
in formula (1), R represents an alkylene group having 1 to 12 carbon atoms, and n represents an integer of 2 or more and 10 or less.
